# EUROPÄISCHE PATENTANMELDUNG

(11) **EP 4 116 007 A1**
(43) Veröffentlichungstag der Anmeldung: **11.01.2023**
(21) Anmeldenummer: 21183896.6
(22) Anmeldetag: 06.07.2021
(51) Int. Cl.: B21D 28/06, B21D 28/16, B21D 43/28, B23D 31/04

(54) **ABFALLTRENNVORRICHTUNG UND VERFAHREN ZUR AUFTRENNUNG EINES STANZGITTERS**

(71) Anmelder: Feintool International Holding AG, 3250 Lyss (CH)
(72) Erfinder: Walther, Andreas, 3177 LAUPEN (CH); Stämpfli, Marc, 3250 LYSS (DE)
(74) Vertreter: Cohausz Hannig Borkowski Wißgott

(57) **Zusammenfassung**

Die Erfindung betrifft ein Verfahren zur Auftrennung eines aus einer Stanzvorrichtung (3), insbesondere aus einer Feinschneidpresse, als Abfall herauslaufenden Stanzgitters (13) mittels einer Abfalltrennvorrichtung (1), insbesondere die zur Stanzvorrichtung (3) als Folgewerkzeug angeordnet ist, wobei mit der Abfalltrennvorrichtung (1) das Stanzgitter (13) mit einem Trennmesser (4e) an einer Schneidkante (4d) senkrecht zu dessen Laufrichtung (2) vollständig durchtrennt wird und hierdurch Stanzgitterabschnitte (13c) gebildet werden, wobei zusammen mit dem Hub des Trennmessers (4e) mit wenigstens einem zum Trennmesser (4e) beabstandeten Stempel (4f), vorzugsweise mit wenigstens zwei Stempeln (4f), wenigstens ein zu den Stanzgitterrändern beabstandeter Gittersteg (13b) des Stanzgitters (13) durchtrennt wird, insbesondere wodurch jeder Stanzgitterabschnitt (13c) in wenigstens zwei Stanzgitterteilabschnitte (13d) unterteilt wird. Die Erfindung betrifft auch eine Abfalltrennvorrichtung (1) einer Stanzvorrichtung (3) umfassend ein Trennmesser (4e) und eine Schneidkante (4d), wobei durch die Zusammenwirkung von Trennmesser (4e) und Schneidkante (4d) bei einem Hub des Trennmessers (4e) ein in einer Laufrichtung (2) zwischen Trennmesser (4e) und Schneidkante (4d) hindurchführbares Stanzgitter (13) senkrecht zur Laufrichtung (2) vollständig durchtrennbar ist, bei der beabstandet zum Trennmesser (4e) wenigstens ein zum Trennmesser (4e) ortsfest angeordneter und zusammen mit dem Trennmesser (4e) bewegbarer Stempel (4f) vorgesehen ist, insbesondere mit dem im Stanzgitter (13) wenigstens ein Gittersteg (13b) des Stanzgitters (13) durchtrennbar ist.

## Beschreibung

Die Erfindung betrifft ein Verfahren zur Auftrennung eines aus einer Stanzvorrichtung als Abfall herauslaufenden Stanzgitters mittels einer Abfalltrennvorrichtung, wobei mit der Abfalltrennvorrichtung das Stanzgitter mit einem Trennmesser an einer Trennkante senkrecht zu dessen Laufrichtung vollständig durchtrennt wird und hierdurch Stanzgitterabschnitte gebildet werden.

Die Erfindung betrifft auch eine Abfalltrennvorrichtung einer Stanzvorrichtung umfassend ein Trennmesser und eine Schneidkante, wobei durch die Zusammenwirkung von Trennmesser und Schneidkante bei einem Hub des Trennmessers ein in einer Laufrichtung zwischen Trennmesser und Schneidkante hindurchführbares Stanzgitter senkrecht zur Laufrichtung vollständig durchtrennbar ist.

Eine Stanzvorrichtung kann z.B. als eine Presse ausgebildet sein, in welcher im sogenannten Durchfallschnitt, aus einem Blech ein Blechstück oder mehrere Blechstücke pro Hub ausgestanzt werden. Eine Stanzvorrichtung kann beispielsweise auch als sogenannte Feinschneidpresse ausgebildet sein, in welcher das zu schneidende / stanzende Blechstück vor dem Schneidvorgang im Gegensatz zum normalen Stanzen entlang der Schnittkontur mittels einer sogenannten Ringzacke festgehalten wird. Auch in dieser Anwendung kann aus einem Blech ein Blechstück oder können mehrere Blechstücke pro Hub ausgestanzt werden.

Der Blechrest, aus dem die Blechstücke ausgestanzt / ausgeschnitten wurden umfasst eine Vielzahl von Ausnehmungen, die in der Kontur üblicherweise dem Negativen des jeweils ausgestanzten Blechstückes entsprechen. Dieser Blechrest wird im Fachterminus als Stanzgitter bezeichnet. Die Ausnehmungen sind in einem solchen Stanzgitter untereinander durch Stege verbunden, so dass das Stanzgitter dem ursprünglichen Blech entsprechend ein einheitliches Band bildet.

Das Stanzgitter ist üblicherweise Abfall der entsorgt oder recycelt werden kann.

Es ist grundsätzlich bekannt das aus einer Stanzvorrichtung herauslaufende Stanzgitter in einer Richtung senkrecht zur Bandlaufrichtung vollständig zu durchtrennen, um so jeweils Stanzgitterabschnitte zu bilden.

Für dieses Durchtrennen wird die eingangs genannte Abfalltrennvorrichtung eingesetzt, die z.B. als sogenanntes Folgewerkzeug in Bandlaufrichtung nach der Stanzvorrichtung angeordnet ist. Nach dem Durchtrennen kann es vorgesehen sein, dass die Stanzgitterabschnitte, die jeweils die volle ursprüngliche Blechbreite betrachtet senkrecht zur Bandlaufrichtung haben, in einen Abfallcontainer fallen.

Problematisch ist es hierbei, dass die Stanzgitterabschnitte ungeordnet in den Abfallbehälter fallen und sich hierbei aufgetrennte Stege und Ausnehmungen verhaken können. Besonders aufgrund der vollen Breite der Stanzgitterabschnitte können diese daher im Abfallbehälter keine große Packungsdichte erzielen. Der Füllgrad eines Abfallbehälters ist daher häufig sehr gering und er muss häufig geleert bzw. ausgetauscht werden.

Vor diesem Hintergrund ist es eine Aufgabe der Erfindung, eine verbesserte Zerkleinerung der Stanzgitterabschnitte zu erreichen, insbesondere um so den Füllgrad von Abfallbehältern zu erhöhen.

Erfindungsgemäß wird dies bei einem Verfahren der eingangs genannten Art dadurch gelöst, dass zusammen mit dem Hub des Trennmessers mit wenigstens einem zum Trennmesser beabstandeten Stempel, wenigstens ein zu den Stanzgitterrändern beabstandeter Gittersteg des Stanzgitters durchtrennt wird.

Weiterhin erfindungsgemäß wird die Aufgabe bei einer Abfalltrennvorrichtung der eingangs genannten Art dadurch gelöst, dass beabstandet zum Trennmesser wenigstens ein zum Trennmesser ortsfest angeordneter und zusammen mit dem Trennmesser bewegbarer Stempel vorgesehen ist, insbesondere mit dem im Stanzgitter wenigstens ein Gittersteg des Stanzgitters durchtrennbar ist.

Das Trennmesser, welches die vollständige Durchtrennung in Querrichtung, also senkrecht zur Bandlaufrichtung vornimmt, ist vorzugsweise in seiner Erstreckungsrichtung senkrecht zur Bandlaufrichtung ausgerichtet. In diesem Fall ist der wenigstens eine Stempel zum Trennmesser in der Laufrichtung/senkrecht zur Erstreckungsrichtung des Trennmessers beabstandet.

Vorzugsweise kann es vorgesehen sein, dass mit wenigstens zwei Stempeln oder mit wenigstens drei Stempeln eine der Stempelanzahl entsprechende Anzahl von zu dem Stanzgitterrand beabstandeten Gitterstegen durchtrennt wird. Z.B. können die wenigstens zwei Stempel, insbesondere alle Stempel der Abfalltrennvorrichtung an einem gemeinsamen Stempelträger angeordnet sein, insbesondere der sich mit einem Abstand parallel zum Trennmesser erstreckt.

Durch die Auftrennung von wenigstens einem Gittersteg, der beabstandet zum Stanzgitterrand angeordnet ist, also sich im Inneren der Stanzgitterfläche befindet, kann zusätzlich zum vollständigen Schnitt in Querrichtung (senkrecht zur Bandlaufrichtung) eine weitere Unterteilung jedes Stanzgitterabschnittes in der Querrichtung erfolgen.

Es kann vorgesehen sein, dass jeder Stanzgitterabschnitt hierdurch in wenigstens zwei Teilabschnitte zerfällt. Hierdurch kann ersichtlich eine höhere Packungsdichte im Abfallbehälter erzielt werden. Auch wird hierdurch das Entsorgen oder das Recycling erleichtert.

Vorzugsweise kann es vorgesehen sein, dass der Stanzgitterabschnitt in eine Anzahl von Teilabschnitten zerfällt, die der Anzahl der Stempel plus 1 entspricht.

Vorzugsweise ist es vorgesehen, dass ein jeweiliger Stempel so angeordnet wird, dass mit diesem jeweils ein solcher Gittersteg durchtrennt wird, dessen Durchtrennung in Verbindung mit dem vollständigen Trennschnitt in der Querrichtung auch zu einer vollständigen Durchtrennung des jeweils erzeugten Stanzgitterabschnittes in der Längsrichtung führt, insbesondere an der Breitenposition des jeweils betrachteten Stempels. Dabei wird unter der Breitenposition die Lage des Stempels relativ zum Stanzgitter senkrecht zur Bandlaufrichtung verstanden.

Besonders bevorzugt können wenigstens zwei Stempel vorgesehen sein, die in der Erstreckungsrichtung des Trennmessers beabstandet zueinander angeordnet sind. Die Stempel können vorzugsweise jeweils auch in der Erstreckungsrichtung des Trennmesser beabstandet zu den sich in der Erstreckungsrichtung gegenüberliegenden Trennmesserenden angeordnet sein.

Weiter bevorzugt kann es vorgesehen sein, dass von den wenigstens zwei Stempeln, vorzugsweise von wenigstens drei Stempel wenigstens einer der Stempel einen anderen Abstand, insbesondere betrachtet in der Bandlaufrichtung, zum Trennmesser aufweist, als wenigstens eine anderer Stempel. Mehrere Stempel können somit in der Bandlaufrichtung zueinander einen Versatz aufweisen, insbesondere wodurch es besonders gut möglich ist, die Stempel in ihrer Position jeweils auch an die Position von Gitterstegen des Stanzgitters anzupassen, insbesondere da häufig für eine hohe Ausbeute die Ausnehmungen im Stanzgitter ebenso versetzt zueinander liegen.

Die Erfindung kann vorzugsweise vorsehen, dass in aufeinanderfolgenden Hüben zunächst der wenigstens eine Gittersteg durchtrennt wird, vorzugsweise mit jedem Stempel jeweils ein Gittersteg durchtrennt wird und anschließend die vollständige Durchtrennung des Stanzgitters senkrecht zur Laufrichtung mit dem Trennmesser erfolgt.

Vorzugsweise ist es dafür vorgesehen, dass der wenigstens eine Stempel in der vorgesehenen Bandlaufrichtung vor dem Trennmesser angeordnet ist.

Nach der Durchtrennung des wenigstens einen Gittersteges ist das Stanzgitter sodann zwar schon innerhalb seiner Stanzgitterfläche aufgetrennt, hat aber in der Querrichtung noch einen Zusammenhalt, insbesondere über Gitterstege am Rand des Stanzgitters. Dieser Zusammenhalt wird erst nachfolgend durch den Trennschnitt in Querrichtung aufgelöst. Erst mit dem Trennschnitt ergibt es sich somit, dass der Stanzgitterabschnitt entsteht und dieser direkt mit dem Trennschnitt in die Teilabschnitte unterteilt ist.

In allen möglichen Ausführung kann es weiterhin vorgesehen sein, dass die Abfalltrennvorrichtung direkt von einer zugeordneten Stanzvorrichtung angetrieben ist, deren erzeugte Stanzgitter zerteilt werden sollen. Durch eine vorzugsweise vorgesehene direkte kinematische Kopplung zwischen Stanzvorrichtung und Abfalltrennvorrichtung kann mit jedem Hub, der ein Stanzen in der Stanzvorrichtung bewirkt ein Hub in der Abfalltrennvorrichtung erzeugt werden, der ein Trennen mit dem wenigstens einen Stempel und dem Trennmesser erzeugt. Ein für die Abfalltrennvorrichtung eigener Antrieb kann so auch eingespart werden. Dennoch ist es auch möglich, dass die Abfalltrennvorrichtung einen eigenen Antrieb aufweist, z.B. der synchronisiert läuft mit einer Stanzvorrichtung.

Die Erfindung kann vorsehen, dass die Auftrennung des wenigstens einen Gitterstegs durch ein Abscheren erfolgt, insbesondere so, wie es auch mit dem Trennmesser erfolgt.

Vorzugsweise ist es hingegen vorgesehen, dass mit dem wenigstens einen Stempel aus dem wenigstens einen Gittersteg ein Teilstück ausgestanzt wird, insbesondere im Durchfallschnitt. Dies hat den Vorteil, dass das Stanzgitter mit seinen verbleibenden Anteilen innerhalb der ursprünglichen Ebene des Bleches verbleibt und so der weitere Lauf des Stanzgitters nicht beeinträchtigt wird. Das ausgestanzte Teilstück kann durch eine Matrizenöffnung, die mit dem jeweiligen Stempel zusammenwirkt, nach unten aus der Abfalltrennvorrichtung herausfallen und gesammelt werden, z.B. in denselben Abfallbehälter fallen, in den auch die Stanzgitterabschnitte hineinfallen.

Eine konstruktiv besonders bevorzugte Ausführung kann es vorsehen, dass die Abfalltrennvorrichtung einen unteren Träger umfasst und einen oberen Träger umfasst, insbesondere der kinematisch an eine Stanzvorrichtung koppelbar ist, mit dem eine Hubbewegung relativ zum unteren Träger durchführbar ist, und ein auswechselbares Stanzmodul umfasst, welches eine mit dem oberen Träger verbundene oder zumindest verbindbare Messereinheit umfasst, an der das Trennmesser und der wenigstens eine Stempel angeordnet ist und welches eine mit dem unteren Träger verbundene oder zumindest verbindbare Schneidplatte umfasst, an der eine mit dem Trennmesser zusammenwirkende Schneidkante und wenigstens eine mit dem wenigstens einen Stempel zusammenwirkende Matrizenöffnung angeordnet ist.

Hierdurch kann ein modularer Aufbau erzielt werden, insbesondere der eine schnelle und günstige Anpassung des Stanzmoduls ermöglicht, wenn sich das Stanzgitter ändert.

Vorzugsweise kann es vorgesehen sein, die Messereinheit und der obere Träger zusammenwirkende Schienenelemente aufweisen, mittels denen die Messereinheit, vorzugsweise in der Laufrichtung eines Stanzgitters oder senkrecht zur Erstreckungsrichtung des Trennmessers, in den oberen Träger eingeschoben oder zumindest einschiebbar ist.

Ein mittlerer Träger kann vorzugsweise zusätzlich vorgesehen sein, an dem eine Führungskulisse des Stanzmoduls befestigt oder zumindest befestigbar ist, durch welche das Trennmesser und der wenigstens eine Stempel oder der gemeinsamer Stempelträger hindurchgeführt sind.

Da die Messereinheit und die Schneidplatte eines solchen Moduls für eine Zusammenwirkung eine definierte relative Lage zueinander haben müssen kann es die Erfindung bevorzugt vorsehen, dass die die Montage des Stanzmoduls in der Abfalltrennvorrichtung mit wenigstens einem Stanzmodulträger erfolgt, mit dem die Elemente des Stanzmoduls zumindest zeitweise, insbesondere zu Montagezwecken, ortsfest relativ zueinander positioniert / positionierbar, vorzugsweise befestigt oder zumindest befestigbar sind, und mit dem das Stanzmodul insgesamt als Einheit in die Abfalltrennvorrichtung einsetzbar und aus dieser entfernbar ist. Durch den wenigstens einen, vorzugsweise durch zwei beabstandete Stanzmodulträger kann während der Montage in der Abfalltrennvorrichtung die relative Lage zwischen Messereinheit und Schneidplatte sicher beibehalten werden, so dass mit montiertem Stanzmodulträger die Befestigung von Messereinheit und Schneidplatte, ggfs. auch der Führungskulisse erfolgen kann. Es kann vorzugsweise vorgesehen sein, dass erst nach Befestigung des Stanzmoduls an/in der Abfalltrennvorrichtung der wenigstens eine Stanzmodulträger entfernt wird.

Das Einsetzten eines Stanzmoduls in der Abfalltrennvorrichtung kann vorzugsweise noch erleichtert werden, wenn die Abfalltrennvorrichtung zwei beabstandete Ablagekonsolen umfasst, auf denen das Stanzmodul aufsetzbar und verschiebbar ist. Solche Ablagekonsolen können an der Abfalltrennvorrichtung entfernbar angeordnet sein und/oder vorzugsweise über einer Abfallrutsche, insbesondere unter einer Abdeckhaube angeordnet sein.

Die wenigstens eine Ablagekonsole kann so an der Abfalltrennvorrichtung angeordnet sein, dass nach Auflegen eines Stanzmoduls die zusammenwirkenden Schienenelemente am oberen Träger und an der Messereinheit so zueinander fluchtend ausgerichtet sind, dass eine Verschiebung des Stanzmoduls, insbesondere mittels des wenigstens einen Stanzmodulträgers, auf der wenigstens einen Auflagekonsole eine Verbindung der Schienenelemente bewirkt.

Weiterhin kann vorzugsweise vorgesehen sein, dass der obere Träger der Abfalltrennvorrichtung zwei beabstandete Führungskanäle aufweist, mittels denen der obere Träger auf jeweilige Führungsstangen einer Stanzvorrichtung aufschiebbar ist. Solche Führungskanäle erstrecken sind vorteilhaft, so wie die jeweilige Führungsstange in der Bandlaufrichtung und sind zueinander senkrecht zur Bandlaufrichtung beabstandet. Durch die Führungsstangen kann die Hubbewegung einer Stanzvorrichtung auf den Träger überragen werden.

Weiterhin ergibt sich durch die Verbindung von Abfalltrennvorrichtung und Stanzvorrichtung über in Kanälen aufgenommene Führungsstangen die besonders einfache Möglichkeit den Abstand zwischen der Abfalltrennvorrichtung und der Stanzvorrichtung variabel durch Verschiebung des oberen Trägers auf den Führungsstangen einstellen zu können. So kann besonders gut die Lage des in Querrichtung erfolgenden Trennschnittes an das Muster der Ausnehmungen im Stanzgitter angepasst werden, insbesondere um diese an einer Stelle mit besonders wenig Materialanteil zu schneiden.

Eine bevorzugte Ausführungsform der Abfalltrennvorrichtung und des Verfahrens wird anhand der nachfolgenden Figuren näher beschrieben.

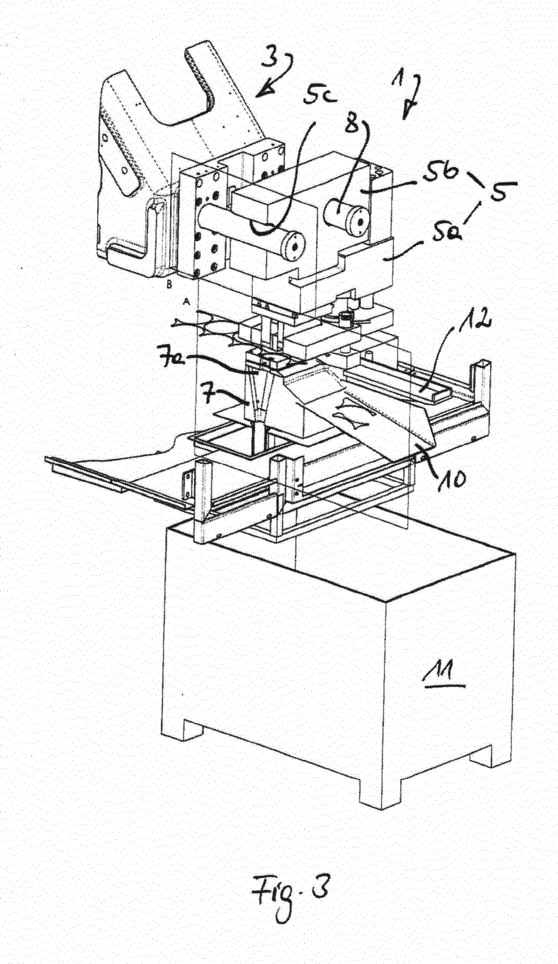

Die Figuren zeigen eine Abfalltrennvorrichtung 1, die als Folgewerkzeug in der Bandlaufrichtung 2 nach einer nur teilweise gezeigten Stanzvorrichtung 3 angeordnet ist. Die Figuren 1A und 1B zeigen hierbei einen Zustand, in welchem ein Stanzmodul 4 noch nicht in die Abfalltrennvorrichtung 1 eingesetzt ist. Die Figuren 1C, 3, 5 und 5 zeigen einen Zustand in welchem das Stanzmodul 4 eingesetzt ist, Die Figuren 2 zeigen einen Stanzmodulträger 14 und die Figuren 6 und 7 visualisieren die verfahrensmäßige Auftrennung des Stanzgitters 13.

Die Abfalltrennvorrichtung 1 umfasst einen oberen Träger 5, der hier zweiteilig aus den Trägerelementen 5a und 5b ausgebildet ist, einen mittleren Träger 6 und einen unteren Träger 7. Der obere Träger 5 weist Führungskanäle 5c auf, die von Führungsstangen 8 der Stanzvorrichtung 3 durchdrungen sind. Eine Hubbewegung der Stanzvorrichtung 3 kann über die Führungsstangen 8 auf den oberen Träger 5 übertragen werden. Die genannten Träger 5, 6, und 7 sind über Linearführungen 9 so aneinander befestigt, dass der obere Träger 5 sich definiert relativ zum unteren Träger 7, insbesondere auch zum mittleren Träger 6 in vertikaler Richtung bewegen kann.

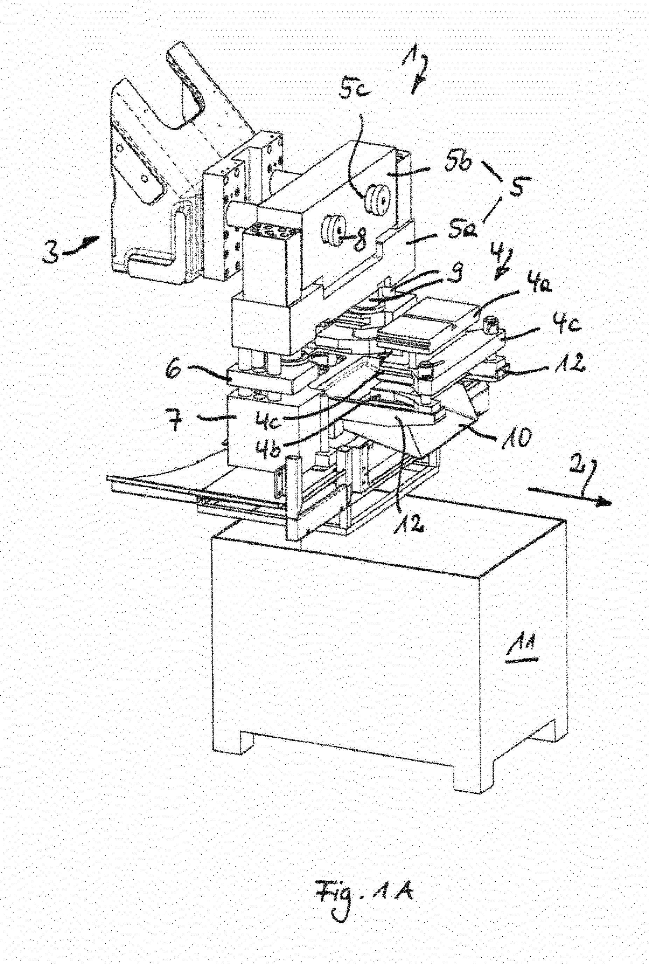

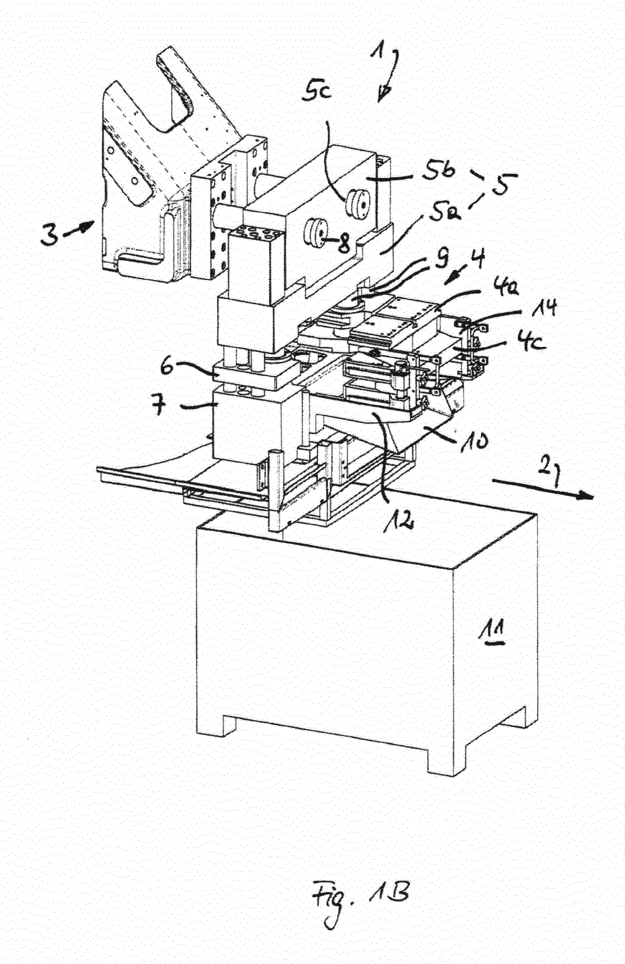

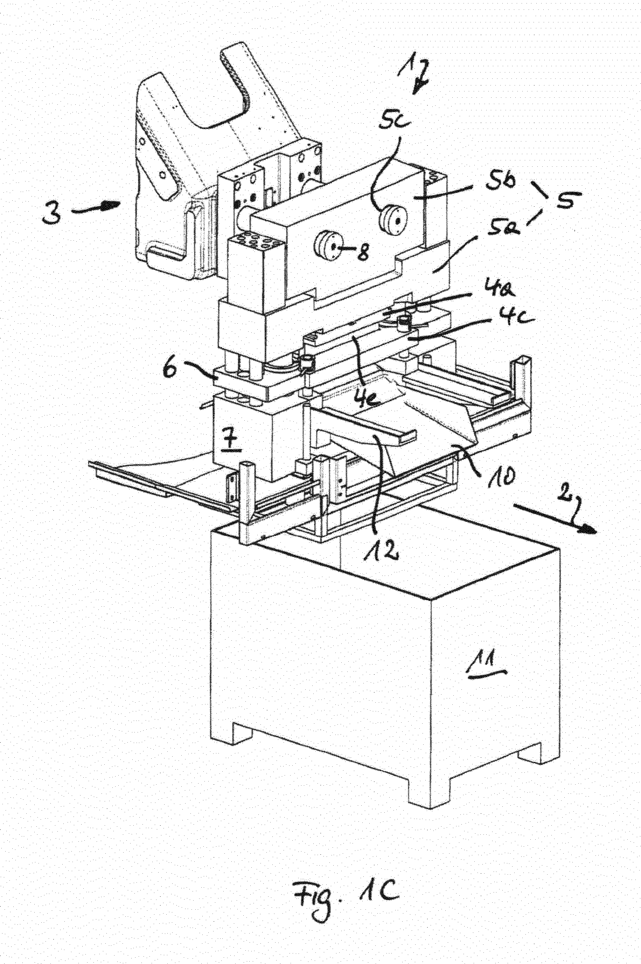

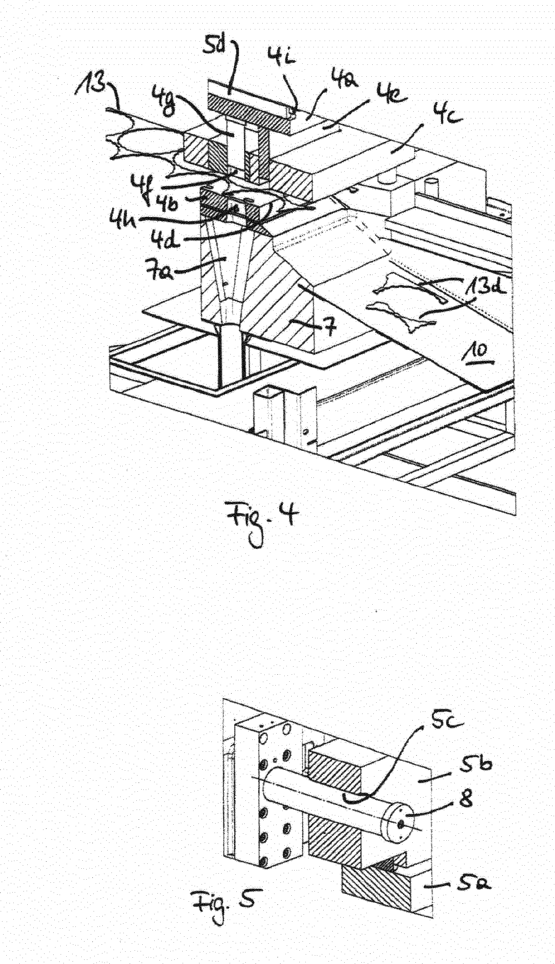

Am unteren Träger 7 ist eine Rutsche 10 angeordnet, über welche erfindungsgemäß unterteilte Stanzgitterabschnitte, die in den Figuren 1 und 4 nicht gezeigt sind, in den Abfallbehälter 11 rutschen können.

Am unteren Träger 7 sind weiterhin zwei senkrecht zur Laufrichtung 2 beabstandete Ablagekonsolen 12 befestigt. In der Figur 1 ist erkennbar, dass das Stanzmodul 4 auf diesen Ablagekonsolen 12 abgelegt ist.

Das Stanzmodul 4 umfasst eine obenliegende Messereinheit 4a, eine untenliegende Schneidplatte 4b und eine dazwischenliegende Führungskulisse 4c. An der Schneidplatte 4b ist eine Schneidkante 4d angeordnet, die mit dem Trennmesser 4e der Messereinheit 4a zusammenwirkt. Dieses weist eine Längserstreckung auf, die senkrecht zur Bandlaufrichtung 2 liegt. Das Trennmesser 4e ist in dieser Richtung länger als das aufzutrennende Blechband bzw. Stanzgitter 13 senkrecht zur Laufrichtung 2 breit ist. Somit wird das Stanzgitter 13 durch das Trennmesser 4e vollständig durchtrennt.

Die Messereinheit 4 umfasst zusätzlich zum Trennmesser 4e noch mehrere Stempel 4f, die an einem gemeinsamen Stempelträger 4g angeordnet sind. Jeder Stempel 4f wirkt mit einer Matrizenöffnung 4h in der Schneidplatte 4b zusammen. Die Matrizenöffnungen 4h münden nach unten in vertikale Kanäle 7a des unteren Trägers, durch welche aus Stanzgitterstegen ausgestanzte Teil durchfallen können. Die Kontur der Matrizenöffnung 4h ist im Wesentlichen form identisch zur Kontur des Stempels 4f bis auf einen technisch nötigen Schneidspalt. Das aus dem Gittersteg ausgestanzte Teilstück entspricht in seiner Form der Überlagerung der Formen von Gittersteg 13b und Matrizenöffnung 4h.

Die Führungskulisse 4c dient zur Führung des Trennmessers und der Stempel 4f bzw. des Stempelträgers 4g.

Zu Montagezwecken kann das Stanzmodul 4 mittels z.B. zwei Stanzmodulträgern 14 in sich fixiert sein, so dass zumindest einige der Elemente des Stanzmoduls 4, vorzugsweise alle Elemente des Stanzmoduls 4 zueinander eine definierte Lage, vorzugsweise eine feste unveränderliche Lage haben. Die Figur 1B zeigt im Wesentlichen dieselbe Ansicht, wie Figur 1A, allerdings mit zwei Stanzmodulträgern 14, die am Stanzmodul 4 befestigt sind, um zumindest einige von dessen Elementen, vorzugsweise alle von dessen Elementen zu Montagezwecken in der vorbestimmten Lage zueinander zu halten. Nach der Montage des Stanzmoduls 4 in der Abfalltrennvorrichtung 1, werden die Stanzmodulträger 14 vom Stanzmodul 4 entfernt. Diesen Zustand zeigt die Figur 1C.

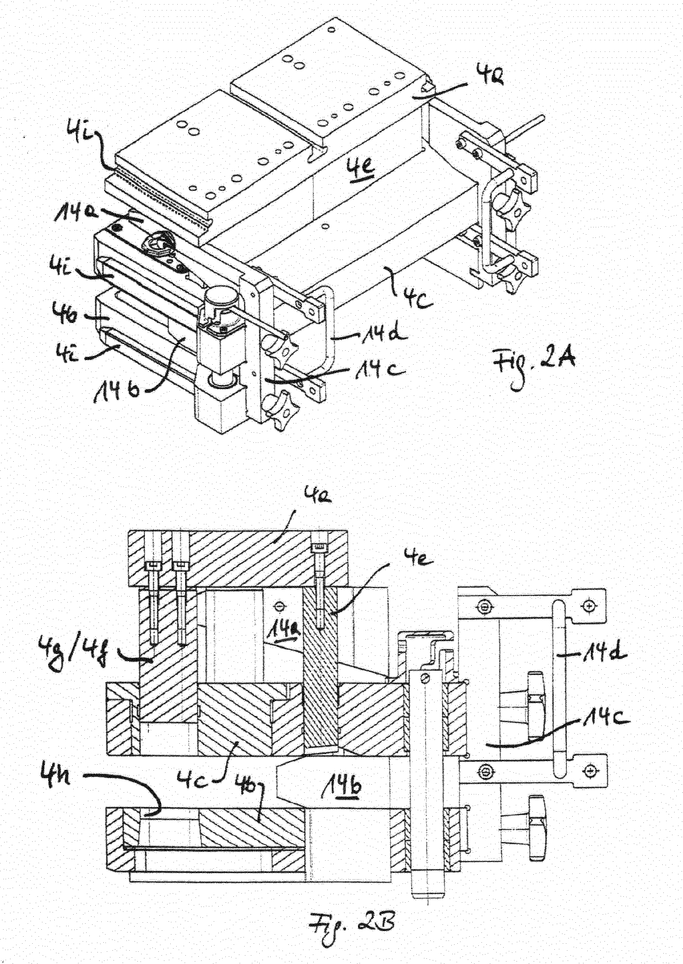

Zumindest die Messereinheit 4a weist, vorzugsweise an deren oberen Platte, zwei sich gegenüberliegende Schienenelemente 4i auf, die mit korrespondierenden Schienenelementen 5d am oberen Träger zusammenwirken, insbesondere in dem Sinne, dass die Messereinheit in den oberen Träger eingeschoben werden kann, wodurch sich die Schienenelemente 4i, 5d verbinden. Die Schienenelemente sind besonders in den Figuren 2 und der Figur 4 zu erkennen. Die Schneidplatte 4b und/oder die Kulissenführung 4c können vorzugsweise ebenso mit Schienenelementen 4i in korrespondierenden Schienenelementen am mittleren Träger 6 verbunden werden.

Die Figur 2A und 2B zeigen in perspektivischer Ansicht und im Schnitt das Stanzmodul 4 losgelöst von den übrigen Elementen der Abfalltrennvorrichtung 1 in einem Zustand in dem zwei Stanzmodulträger 14 an dem Stanzmodul 4 befestigt sind. Die Stanzmodulträger 14 werden vorzugsweise an zwei gegenüberliegenden Seitenbereichen des Stanzmoduls 4 an diesem befestigt.

Ein jeder Stanzmodulträger 14 ist vorzugsweise zumindest mit einer Teilanzahl aller Elemente des Stanzmoduls 4 verbindbar, vorzugsweise fest verbindbar, z.B. durch Verschraubung. Hier kann es vorgesehen sein, dass eine geschraubte Verbindung zumindest zur Schneidplatte 4b und der Führungskulisse 4c des Stanzmoduls 4 besteht. Die Messereinheit 4a kann vorzugsweise lose, aber dennoch in einer definierten relativen Lage zu den anderen Elementen 4b, 4c auf den Stanzmodulträgern 14 aufliegen. Alternativ kann auch eine geschraubte Verbindung zum Stanzmodulträger 14 bei der Messereinheit 4a vorgesehen sein.

Vorzugsweise ist es vorgesehen, dass ein jeweiliger Stanzmodulträger 14 wenigstens einen in der Schieberichtung auf der Ablagekonsole 12 sich erstreckenden Träger 14a aufweist, vorzugsweise zwei untereinanderliegende sich jeweils in der Schieberichtung erstreckende Träger 14a, 14b aufweist, die durch ein Brückenelement 14c verbunden sind. Solche Träger 14a, 14b können sich vorzugsweise zum freien Ende hin verjüngen. Die Träger können zwischen die Elemente des Stanzmoduls 4 geschoben werden und halten diese in definiertem Abstand. Z.B. kann der obere Träger 14a zwischen Messereinheit 4a und Führungskulisse 4c zu liegen kommen und der untere Träger 14b zwischen Schneidplatte 4b und Führungskulisse 4c. Die relativ zur Führungskulisse 4c bewegbare Messereinheit 4a kann auf dem oberen Träger 14a lose aufliegen oder auch mit diesem verschraubt sein.

An den Stanzmodulträgern 14 können Griffelemente 14d befestigt sein zur besseren Handhabung.

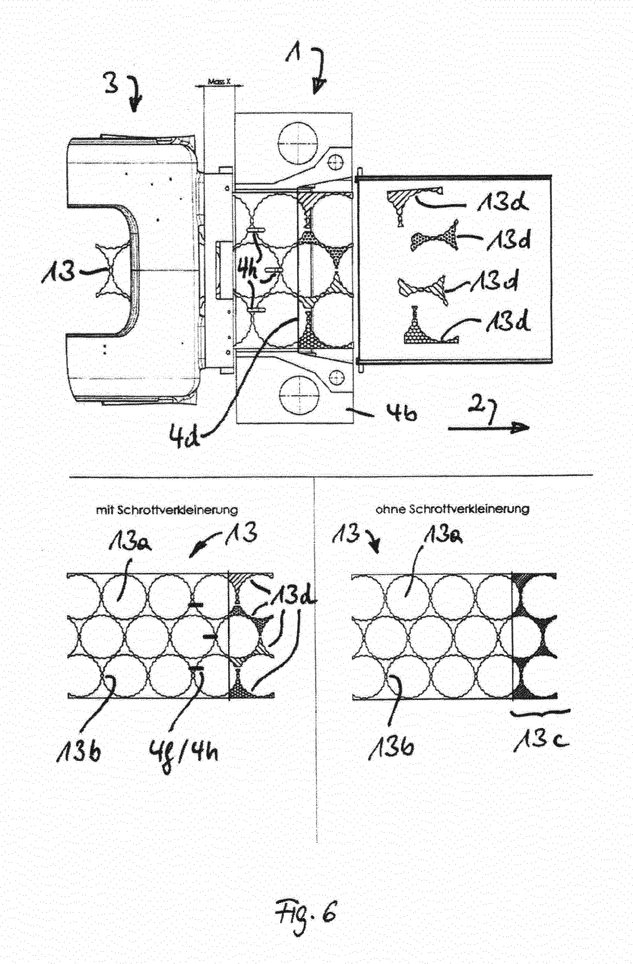

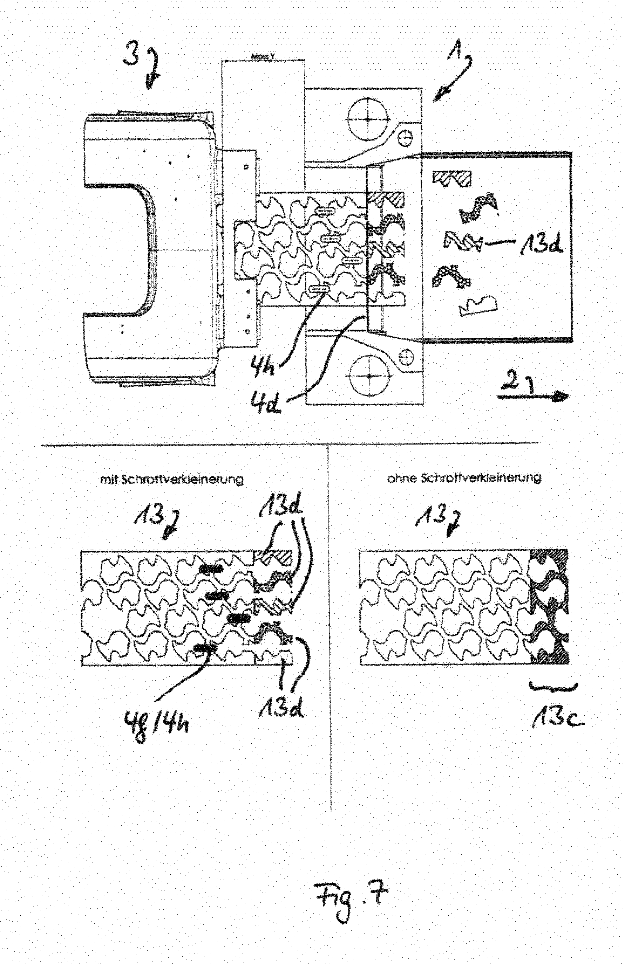

Die Figuren 6 und 7 visualisieren die verfahrensgemäße Arbeitsweise an zwei verschiedenen Beispielen.

In der Figur 6 oben ist ein Stanzgitter 13 dargestellt, dass in Bandlaufrichtung 2 aus einer Stanzvorrichtung 3 ausläuft und in die Abfalltrennvorrichtung 1 einläuft. Das Stanzgitter 13 umfasst im wesentlichen kreisrunde Ausnehmungen 13a, z.B. mit einer Randwelligkeit. Z.B. entstehen solche Ausnehmungen bei der Fertigung von Lamellenblechen für Automatikgetriebe von Kraftfahrzeugen. Die Ausnehmungen 13 sind zueinander versetzt angeordnet und durch Gitterstege 13b verbunden.

Gemäß dem bisherigen Stand der Technik ist es vorgesehen, mit dem Trennmesser entlang der Schneidkante 4d das Stanzgitter quer, vorzugsweise senkrecht zur Bandlaufrichtung 2 vollständig zu durchtrennen. Hierdurch würden zusammenhängende 13c Stanzgitterabschnitte entstehen, die in den Figuren 6 und 7 der Summe aller schraffierten Flächenbereiche des Stanzgitters 13b entsprechen.

Erfindungsgemäß ist es hingegen weiterhin vorgesehen mit den Stempeln 4f am jeweiligen Ort über den Matrizenöffnungen 4h solche Stanzgitterstege 13b mit Stempeln 4f zu durchtrennen, welche im Stanzgitter 13 eine Verbindung zwischen dessen Rändern in der Querrichtung ausbilden. Durch diese Auftrennung zerfällt ein Stanzgitterabschnitt in die Teilabschnitte 13d. Hierdurch kann im Abfallbehälter 11 eine deutlich größere Packungsdichte erzielt werden.

Durch die in Bandlaufrichtung versetzte Lage der Stempel 4f können diese gut auf die Gitterstegpositionen angepasst werden.

Die Lage von Trennmesser 4e und der Stempel 4f ist vorzugsweise so gewählt, dass das Trennmesser 4e eine Trennung des Stanzgitters 13 in einem Bereich mit möglichst wenig Materialanteil vornimmt, insbesondere am Ort des geringsten Materialanteils im Stanzgitter (betrachtet in Querrichtung) vornimmt und jeder Stempel 4f einen Gittersteg 13b durchtrennt, vorzugsweise der eine Querverbindung im Stanzgitter 13 darstellt.

Die Figur 6 zeigt, dass die Abfalltrennvorrichtung 1 mit einem Abstand gemäß Maß X zur Stanzvorrichtung 3 angeordnet ist.

Die Figur 7 zeigt in einer Anwendung mit einem anderen Stanzgitter 13 die Beabstandung zwischen Stanzvorrichtung 3 und Abfalltrennvorrichtung 1 mit einem Maß Y. Bei Figur 6 werden statt drei Stempeln 4f vier Stempel 4f eingesetzt, da es mehr querverbindende Stege 13b in dem gezeigten Muster des Stanzgitters 13 gibt im Vergleich zur Figur 6. Auch haben bei Figur 7 alle Stempel 4f einen anderen Abstand zum Trennmesser 4e.

Die Abstandsveränderung kann durch Verschiebung zwischen den Führungsstangen 8 und den Kanälen 5c am oberen Träger der Abfalltrennvorrichtung 3 erfolgen.

## Patentansprüche

1. Verfahren zur Auftrennung eines aus einer Stanzvorrichtung (3), insbesondere aus einer Feinschneidpresse, als Abfall herauslaufenden Stanzgitters (13) mittels einer Abfalltrennvorrichtung (1), insbesondere die zur Stanzvorrichtung (3) als Folgewerkzeug angeordnet ist, wobei mit der Abfalltrennvorrichtung (1) das Stanzgitter (13) mit einem Trennmesser (4e) an einer Schneidkante (4d) senkrecht zu dessen Laufrichtung (2) vollständig durchtrennt wird und hierdurch Stanzgitterabschnitte (13c) gebildet werden, **dadurch gekennzeichnet, dass** zusammen mit dem Hub des Trennmessers (4e) mit wenigstens einem zum Trennmesser (4e) beabstandeten Stempel (4f), vorzugsweise mit wenigstens zwei Stempeln (4f), wenigstens ein zu den Stanzgitterrändern beabstandeter Gittersteg (13b) des Stanzgitters (13) durchtrennt wird, insbesondere wodurch jeder Stanzgitterabschnitt (13c) in wenigstens zwei Stanzgitterteilabschnitte (13d) unterteilt wird.

2. Verfahren nach Anspruch 1, **dadurch gekennzeichnet, dass** in aufeinander folgenden Hüben zunächst der wenigstens eine Gittersteg (13b) durchtrennt wird und anschließend die vollständige Durchtrennung des Stanzgitters (13) senkrecht zur Laufrichtung (2) erfolgt.

3. Verfahren nach einem der vorherigen Ansprüche, **dadurch gekennzeichnet, dass** mit dem wenigstens einen Stempel (4f) aus dem wenigstens einen Gittersteg (13b) ein Teilstück ausgestanzt wird, insbesondere im Durchfallschnitt.

4. Abfalltrennvorrichtung (1) einer Stanzvorrichtung (3), insbesondere einer Feinschneidpresse, umfassend ein Trennmesser (4e) und eine Schneidkante (4d), wobei durch die Zusammenwirkung von Trennmesser (4e) und Schneidkante (4d) bei einem Hub des Trennmessers (4e) ein in einer Laufrichtung (2) zwischen Trennmesser (4e) und Schneidkante (4d) hindurchführbares Stanzgitter (13) senkrecht zur Laufrichtung (2) vollständig durchtrennbar ist, **dadurch gekennzeichnet, dass** beabstandet zum Trennmesser (4e), insbesondere beabstandet in der Laufrichtung (2) /senkrecht zur Erstreckungsrichtung des Trennmessers (4e), wenigstens ein zum Trennmesser (4e) ortsfest angeordneter und zusammen mit dem Trennmesser (4e) bewegbarer Stempel (4f) vorgesehen ist, insbesondere mit dem im Stanzgitter (13) wenigstens ein Gittersteg (13b) des Stanzgitters (13) durchtrennbar ist.

5. Abfalltrennvorrichtung nach Anspruch 4, **dadurch gekennzeichnet, dass** der wenigstens eine Stempel (4f) in der vorgesehenen Bandlaufrichtung (2) vor dem Trennmesser (4e) angeordnet ist.

6. Abfalltrennvorrichtung nach Anspruch 4 oder 5, **dadurch gekennzeichnet, dass** wenigstens zwei Stempel (4f) an einem gemeinsamen Stempelträger (4g) angeordnet sind, insbesondere der sich mit einem Abstand parallel zum Trennmesser (4e) erstreckt.

7. Abfalltrennvorrichtung nach einem der vorherigen Ansprüche 4 bis 6, **dadurch gekennzeichnet, dass** wenigstens zwei Stempel (4f) vorgesehen sind, die in der Erstreckungsrichtung des Trennmessers (4e) beabstandet zueinander angeordnet sind.

8. Abfalltrennvorrichtung nach Anspruch 7, **dadurch gekennzeichnet, dass** von den wenigstens zwei Stempeln (4f), vorzugsweise von wenigstens drei Stempeln (4f) wenigstens einer der Stempel (4f) einen anderen Abstand zum Trennmesser (4e) aufweist, als der wenigstens eine andere Stempel (4f).

9. Abfalltrennvorrichtung nach einem der vorherigen Ansprüche 4 bis 8,
**dadurch gekennzeichnet, dass** sie
a. einen unteren Träger (7) umfasst und
b. einen oberen Träger (5,5a, 5b) umfasst, insbesondere der kinematisch an eine Stanzvorrichtung (3) koppelbar ist, mit dem eine Hubbewegung relativ zum unteren Träger (7) durchführbar ist, und
c. ein auswechselbares Stanzmodul (4) umfasst, welches eine mit dem oberen Träger (5, 5a, 5b) verbundene oder zumindest verbindbare Messereinheit (4a) umfasst, an der das Trennmesser (4e) und der wenigstens eine Stempel (4f) angeordnet ist und welches eine mit dem unteren Träger (7) verbundene oder zumindest verbindbare Schneidplatte (4b) umfasst, an der eine mit dem Trennmesser (4e) zusammenwirkende Schneidkante (4d) und wenigstens eine mit dem wenigstens einen Stempel (4f) zusammenwirkende Matrizenöffnung (4h) angeordnet ist.

10. Abfalltrennvorrichtung nach Anspruch 9, **dadurch gekennzeichnet, dass** die Messereinheit (4a) und der obere Träger (5, 5a, 5b) zusammenwirkende Schienenelemente (4i, 5d) aufweisen, mittels denen die Messereinheit (4a), vorzugsweise in der Laufrichtung (2) eines Stanzgitters (13) oder senkrecht zur Erstreckungsrichtung des Trennmessers (4e), in den oberen Träger (5, 5a, 5b) eingeschoben oder zumindest einschiebbar ist.

11. Abfalltrennvorrichtung nach Anspruch 9 oder 10, **dadurch gekennzeichnet, dass** sie einen mittleren Träger (6) aufweist, an dem eine Führungskulisse (4c) des Stanzmoduls (4) befestigt oder zumindest befestigbar ist, durch welche das Trennmesser (4e) und der wenigstens eine Stempel (4f) oder der gemeinsamer Stempelträger (4g) hindurchgeführt sind.

12. Abfalltrennvorrichtung nach einem der vorherigen Ansprüche 4 bis 11, **dadurch gekennzeichnet, dass** sie wenigstens einen Stanzmodulträger (14) umfasst, mit dem zumindest einige der Elemente des Stanzmoduls, vorzugsweise alle Elemente des Stanzmoduls (4) zumindest zeitweise, insbesondere zu Montagezwecken, ortsfest relativ zueinander positionierbar, vorzugsweise befestigt oder zumindest befestigbar sind, und mit dem das Stanzmodul (4) insgesamt als Einheit in die Abfalltrennvorrichtung (1) einsetzbar und aus dieser entfernbar ist.

13. Abfalltrennvorrichtung nach einem der vorherigen Ansprüche 4 bis 12, **dadurch gekennzeichnet, dass** sie zwei beabstandete Ablagekonsolen (12) umfasst, insbesondere die entfernbar sind, vorzugsweise die über einer Abfallrutsche (10) angeordnet sind, auf denen das Stanzmodul (4) aufsetzbar und verschiebbar ist.

14. Abfalltrennvorrichtung nach einem der vorherigen Ansprüche 4 bis 13, **dadurch gekennzeichnet, dass** der obere Träger (5, 5a, 5b) zwei beabstandete Führungskanäle (5c) aufweist, mittels denen der obere Träger (5, 5a, 5b) auf jeweilige Führungsstangen (8) einer Stanzvorrichtung (3) aufschiebbar ist, insbesondere mittels denen der oberer Träger (5, 5a, 5b) durch die Stanzvorrichtung (3) bei deren Hub bewegbar ist.

## Geänderte Patentansprüche

### Geänderte Patentansprüche gemäss Regel 137(2) EPÜ.

1. Verfahren zur Auftrennung eines aus einer Stanzvorrichtung (3), insbesondere aus einer Feinschneidpresse, als Abfall herauslaufenden Stanzgitters (13) mittels einer Abfalltrennvorrichtung (1), insbesondere die zur Stanzvorrichtung (3) als Folgewerkzeug angeordnet ist, wobei mit der Abfalltrennvorrichtung (1) das Stanzgitter (13) mit einem Trennmesser (4e) an einer Schneidkante (4d) senkrecht zu dessen Laufrichtung (2) vollständig durchtrennt wird und hierdurch Stanzgitterabschnitte (13c) gebildet werden, wobei zusammen mit dem Hub des Trennmessers (4e) mit wenigstens einem zum Trennmesser (4e) beabstandeten Stempel (4f), vorzugsweise mit wenigstens zwei Stempeln (4f), wenigstens ein zu den Stanzgitterrändern beabstandeter Gittersteg (13b) des Stanzgitters (13) durchtrennt wird, wodurch jeder Stanzgitterabschnitt (13c) in wenigstens zwei Stanzgitterteilabschnitte (13d) unterteilt wird, **dadurch gekennzeichnet, dass** mit dem wenigstens einen Stempel (4f) aus dem wenigstens einen Gittersteg (13b) ein Teilstück im Durchfallschnitt ausgestanzt wird.

2. Verfahren nach Anspruch 1, **dadurch gekennzeichnet, dass** in aufeinander folgenden Hüben zunächst der wenigstens eine Gittersteg (13b) durchtrennt wird und anschließend die vollständige Durchtrennung des Stanzgitters (13) senkrecht zur Laufrichtung (2) erfolgt.

3. Abfalltrennvorrichtung (1) für eine Stanzvorrichtung (3), insbesondere für eine Feinschneidpresse, umfassend ein Trennmesser (4e) und eine Schneidkante (4d), wobei durch die Zusammenwirkung von Trennmesser (4e) und Schneidkante (4d) bei einem Hub des Trennmessers (4e) ein in einer Laufrichtung (2) zwischen Trennmesser (4e) und Schneidkante (4d) hindurchführbares Stanzgitter (13) senkrecht zur Laufrichtung (2) vollständig durchtrennbar ist, wobei beabstandet zum Trennmesser (4e), insbesondere beabstandet in der Laufrichtung (2) /senkrecht zur Erstreckungsrichtung des Trennmessers (4e), wenigstens ein zum Trennmesser (4e) ortsfest angeordneter und zusammen mit dem Trennmesser (4e) bewegbarer Stempel (4f) vorgesehen ist, mit dem im Stanzgitter (13) wenigstens ein Gittersteg (13b) des Stanzgitters (13) durchtrennbar ist, **dadurch gekennzeichnet, dass** dass mit dem wenigstens einen Stempel (4f) aus dem wenigstens einen Gittersteg (13b) ein Teilstück im Durchfallschnitt ausstanzbar ist.

4. Abfalltrennvorrichtung nach Anspruch 3, **dadurch gekennzeichnet, dass** der wenigstens eine Stempel (4f) in der vorgesehenen Bandlaufrichtung (2) vor dem Trennmesser (4e) angeordnet ist.

5. Abfalltrennvorrichtung nach Anspruch 3 oder 4, **dadurch gekennzeichnet, dass** wenigstens zwei Stempel (4f) an einem gemeinsamen Stempelträger (4g) angeordnet sind, insbesondere der sich mit einem Abstand parallel zum Trennmesser (4e) erstreckt.

6. Abfalltrennvorrichtung nach einem der vorherigen Ansprüche 3 bis 5,
**dadurch gekennzeichnet, dass** wenigstens zwei Stempel (4f) vorgesehen sind, die in der Erstreckungsrichtung des Trennmessers (4e) beabstandet zueinander angeordnet sind.

7. Abfalltrennvorrichtung nach Anspruch 6, **dadurch gekennzeichnet, dass** von den wenigstens zwei Stempeln (4f), vorzugsweise von wenigstens drei Stempeln (4f) wenigstens einer der Stempel (4f) einen anderen Abstand zum Trennmesser (4e) aufweist, als der wenigstens eine andere Stempel (4f).

8. Abfalltrennvorrichtung nach einem der vorherigen Ansprüche 3 bis 7,
**dadurch gekennzeichnet, dass** sie
a. einen unteren Träger (7) umfasst und
b. einen oberen Träger (5,5a, 5b) umfasst, insbesondere der kinematisch an eine Stanzvorrichtung (3) koppelbar ist, mit dem eine Hubbewegung relativ zum unteren Träger (7) durchführbar ist, und
c. ein auswechselbares Stanzmodul (4) umfasst, welches eine mit dem oberen Träger (5, 5a, 5b) verbundene oder zumindest verbindbare Messereinheit (4a) umfasst, an der das Trennmesser (4e) und der wenigstens eine Stempel (4f) angeordnet ist und welches eine mit dem unteren Träger (7) verbundene oder zumindest verbindbare Schneidplatte (4b) umfasst, an der eine mit dem Trennmesser (4e) zusammenwirkende Schneidkante (4d) und wenigstens eine mit dem wenigstens einen Stempel (4f) zusammenwirkende Matrizenöffnung (4h) angeordnet ist.

9. Abfalltrennvorrichtung nach Anspruch 8, **dadurch gekennzeichnet, dass** die Messereinheit (4a) und der obere Träger (5, 5a, 5b) zusammenwirkende Schienenelemente (4i, 5d) aufweisen, mittels denen die Messereinheit (4a), vorzugsweise in der Laufrichtung (2) eines Stanzgitters (13) oder senkrecht zur Erstreckungsrichtung des Trennmessers (4e), in den oberen Träger (5, 5a, 5b) eingeschoben oder zumindest einschiebbar ist.

10. Abfalltrennvorrichtung nach Anspruch 8 oder 8, **dadurch gekennzeichnet, dass** sie einen mittleren Träger (6) aufweist, an dem eine Führungskulisse (4c) des Stanzmoduls (4) befestigt oder zumindest befestigbar ist, durch welche das Trennmesser (4e) und der wenigstens eine Stempel (4f) oder der gemeinsamer Stempelträger (4g) hindurchgeführt sind.

11. Abfalltrennvorrichtung nach einem der vorherigen Ansprüche 3 bis 10,
**dadurch gekennzeichnet, dass** sie wenigstens einen Stanzmodulträger (14) umfasst, mit dem zumindest einige der Elemente des Stanzmoduls, vorzugsweise alle Elemente des Stanzmoduls (4) zumindest zeitweise, insbesondere zu Montagezwecken, ortsfest relativ zueinander positionierbar, vorzugsweise befestigt oder zumindest befestigbar sind, und mit dem das Stanzmodul (4) insgesamt als Einheit in die Abfalltrennvorrichtung (1) einsetzbar und aus dieser entfernbar ist.

12. Abfalltrennvorrichtung nach einem der vorherigen Ansprüche 3 bis 11,
**dadurch gekennzeichnet, dass** sie zwei beabstandete Ablagekonsolen (12) umfasst, insbesondere die entfernbar sind, vorzugsweise die über einer Abfallrutsche (10) angeordnet sind, auf denen das Stanzmodul (4) aufsetzbar und verschiebbar ist.

13. Abfalltrennvorrichtung nach einem der vorherigen Ansprüche 3 bis 12,
**dadurch gekennzeichnet, dass** der obere Träger (5, 5a, 5b) zwei beabstandete Führungskanäle (5c) aufweist, mittels denen der obere Träger (5, 5a, 5b) auf jeweilige Führungsstangen (8) einer Stanzvorrichtung (3) aufschiebbar ist, insbesondere mittels denen der oberer Träger (5, 5a, 5b) durch die Stanzvorrichtung (3) bei deren Hub bewegbar ist.
